# EUROPÄISCHE PATENTSCHRIFT

(11) **EP 1 565 338 B1**
(45) Veröffentlichungstag und Bekanntmachung des Hinweises auf die Patenterteilung: **27.09.2006**
(21) Anmeldenummer: 04801824.6
(22) Anmeldetag: 05.11.2004
(51) Int. Cl.: B60K 15/077

(54) **FÖRDEREINHEIT ZUR FÖRDERUNG VON KRAFTSTOFF AUS EINEM KRAFTSTOFFBEHÄLTER**
SUPPLY UNIT FOR SUPPLYING FUEL FROM A FUEL TANK
UNITE SERVANT A ACHEMINER DU CARBURANT CONTENU DANS UN RESERVOIR DU CARBURANT

(30) Priorität: 05.12.2003 DE 10356965
(43) Veröffentlichungstag der Anmeldung: 24.08.2005
(73) Patentinhaber: SIEMENS AKTIENGESELLSCHAFT, 80333 München (DE)
(72) Erfinder: RUMPF, Bernd, 61130 Nidderau-Windecken (DE)
(86) Internationale Anmeldenummer: PCT/EP2004/052823
(87) Internationale Veröffentlichungsnummer: WO 2005/053988

(56) Entgegenhaltungen:
- DE-A1- 4 328 198
- DE-A1- 10 161 403
- US-A- 4 354 521
- US-B1- 6 606 980

## Beschreibung

Die Erfindung betrifft eine Fördereinheit zur Förderung von Kraftstoff aus einem Kraftstoffbehälter eines Kraftfahrzeuges mit einem eine erste Kammer zum Sammeln von Kraftstoff aufweisenden Schwalltopf, mit einer Kraftstoffpumpe zum Ansaugen von Kraftstoff und mit einer nahe des Bodens der ersten Kammer des Schwalltopfes angeordneten Ansaugöffnung der Kraftstoffpumpe, wobei eine zweite Kammer über ein Ventil mit der ersten Kammer verbunden ist und das Ventil ein Drosselventil ist, siehe US-B-6 606 980 und US-A-4 354 521.

Solche Fördereinheiten werden bei heutigen Kraftfahrzeugen häufig eingesetzt und sind aus der Praxis bekannt. Die Kammer des Schwalltopfes weist in der Regel ein Bodenventil auf und wird über eine von der Kraftstoffpumpe angetriebenen Saugstrahlpumpe mit Kraftstoff befüllt. Der Schwalltopf wird zudem in einem Bodenbereich des Kraftstoffbehälters angeordnet, so dass Kraftstoff aus dem Kraftstoffbehälter über das Bodenventil in den Schwalltopf einströmen kann. Durch die Befüllung des Schwalltopfes über die Saugstrahlpumpe wird sichergestellt, dass auch bei einem sehr geringen Füllstand an Kraftstoff im Kraftstoffbehälter der Schwalltopf ausreichend mit Kraftstoff gefüllt ist.

Bei leerem Kraftstoffbehälter entleert sich auch der Schwalltopf, wodurch die Ansaugöffnung der Kraftstoffpumpe aus dem Kraftstoff aus taucht. Bevor die Kraftstoffpumpe erneut Kraftstoff fördern kann, ist es erforderlich, beispielsweise mittels eines Reservekanisters, soviel Kraftstoff in den Kraftstoffbehälter zu füllen, dass Kraftstoff in den Schwalltopf eindringt. Erst wenn die Ansaugöffnung der Kraftstoffpumpe wieder in den Kraftstoff eintaucht, kann die Kraftstoffpumpe Kraftstoff fördern. Hierfür ist jedoch eine Mindestmenge an Kraftstoff erforderlich.

Man hat bereits daran gedacht, den Schwalltopf unmittelbar unterhalb eines Einfüllstutzens des Kraftstoffbehälters anzuordnen. Hierbei wird der Schwalltopf bei einer Befüllung des Kraftstoffs zuerst befüllt. Diese Anordnung des Schwalltopfes ist jedoch bei heutigen, meist sehr flachen und verwinkelten Kraftstoffbehältern häufig nicht möglich.

Der Erfindung liegt das Problem zugrunde, eine Fördereinheit der eingangs genannten Art so zu gestalten, dass nach einer Entleerung der ersten Kammer des Schwalltopfes die Ansaugöffnung der Kraftstoffpumpe zuverlässig mit Kraftstoff bedeckt wird.

Dieses Problem wird bei einer gattungsgemäßen Fördereinheit erfindungsgemäß dadurch gelöst, daß der von dem Ventil begrenzte Volumenstrom an Kraftstoff kleiner ist als der von der Kraftstoffpumpe geförderte Volumenstrom.

Durch diese Gestaltung wird sich die erste Kammer nach der Entleerung des Kraftstoffbehälters zunächst wie bei der bekannten Fördereinheit entleeren. Über eine von der Drosselwirkung des Ventils abhängigen Zeitspanne strömt Kraftstoff aus der zweiten Kammer in die erste Kammer über und bedeckt die Ansaugöffnung der Kraftstoffpumpe. Eine Förderung der Kraftstoffpumpe wird dank der Erfindung sichergestellt. Wird gleichzeitig eine geringe Menge an Kraftstoff, beispielsweise über den Reservekanister in den Kraftstoffbehälter nachgefüllt, vermag die erfindungsgemäße Fördereinheit den nachgefüllten Kraftstoff zu fördern.

Die erfindungsgemäße Fördereinheit hat einen besonders geringen Montageaufwand, wenn die zweite Kammer einstückig mit dem Schwalltopf gefertigt ist.

Die zweite Kammer könnte beispielsweise oberhalb der ersten Kammer angeordnet sein. Eine Befüllung der zweiten Kammer lässt sich jedoch gemäß einer anderen vorteilhaften Weiterbildung der Erfindung einfach sicherstellen, wenn die Kammern in derselben Höhe angeordnet sind. Damit lässt sich im Betrieb der erfindungsgemäßen Fördereinheit die zweite Kammer wie die erste Kammer mit Kraftstoff befüllen.

Die erfindungsgemäße Fördereinheit weist einen besonders geringen baulichen Aufwand auf, wenn das Ventil in einer gemeinsamen Wandung der ersten Kammer und der zweiten Kammer angeordnet ist.

Der Schwalltopf gestaltet sich gemäß einer anderen vorteilhaften Weiterbildung der Erfindung besonders kompakt, wenn die zweite Kammer als die erste Kammer umschließende Ringkammer ausgebildet ist. Hierdurch lässt sich die erfindungsgemäße Fördereinheit auch in besonders flachen und verwinkelten Kraftstoffbehältern einfach anordnen.

Eine zuverlässige Befüllung der zweiten Kammer mit Kraftstoff lässt sich gemäß einer anderen vorteilhaften Weiterbildung der Erfindung einfach sicherstellen, wenn die zweite Kammer innerhalb des Schwalltopfes angeordnet ist und die gemeinsame Wandung zwischen der ersten Kammer und der zweiten Kammer niedriger ist als eine äußere Wandung des Schwalltopfes. Damit kann Kraftstoff von der ersten Kammer in die zweite Kammer überströmen.

Die Drosselung des von der zweiten Kammer in die erste Kammer überströmenden Kraftstoffs erfordert gemäß einer anderen vorteilhaften Weiterbildung der Erfindung einen besonders geringen baulichen Aufwand, wenn das Ventil als Öffnung mit vorgesehenem Querschnitt ausgebildet ist.

Während der Entleerung der ersten Kammer muss das Ventil ein Überströmen des Kraftstoffs aus der zweiten Kammer in die erste Kammer drosseln, damit bei leerem Kraftstoffbehälter in der zweiten Kammer ausreichend Kraftstoff verbleibt. Eine ausreichende Drosselung des überströmenden Kraftstoffs lässt sich gemäß einer vorteilhaften Weiterbildung der Erfindung bei üblichen Volumen von bekannten Schwalltöpfen einfach erreichen, wenn das Ventil den von der zweiten Kammer in die erste Kammer überströmenden Volumenstrom derart drosselt, dass ein Niveauausgleich in drei bis fünf Minuten nach Stillstand der Kraftstoffpumpe erfolgt.

Ein ausreichender Füllstand von Kraftstoff in der ersten Kammer nach der Entleerung des Kraftstoffbehälters lässt sich gemäß einer anderen vorteilhaften Weiterbildung der Erfindung zuverlässig sicherstellen, wenn die zweite Kammer ein Volumen von ungefähr 10-20% des Schwalltopfvolumens hat.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch einen Längsschnitt durch einen Kraftstoffbehälter mit einer darin angeordneten erfindungsgemäßen Fördereinheit,
- Fig. 2: die erfindungsgemäße Fördereinheit aus Figur 1 nach einem Nachfüllen des Kraftstoffbehälters mit einer geringen Menge an Kraftstoff.

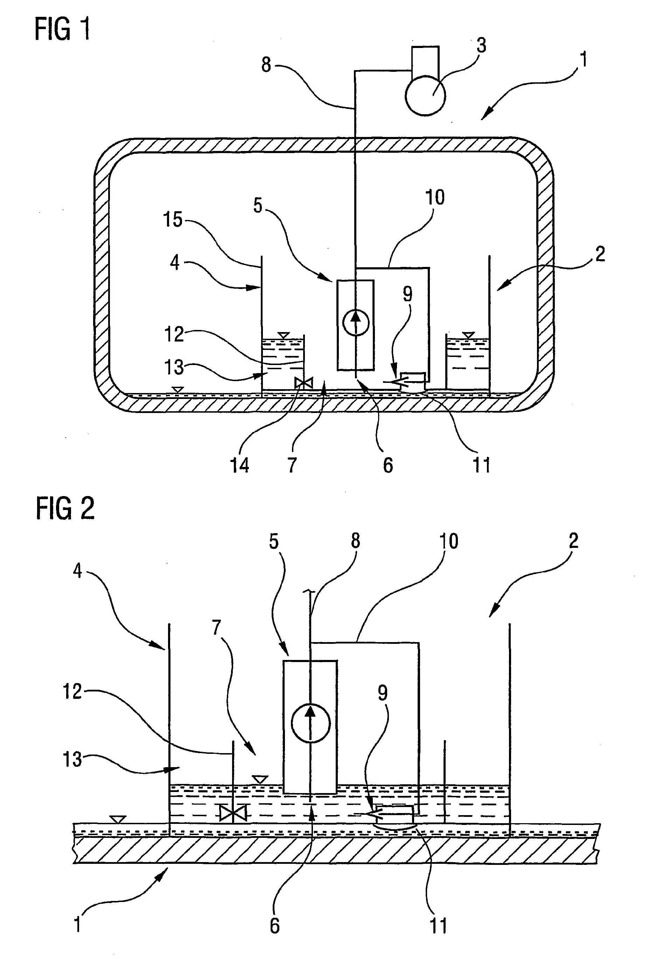

Figur 1 zeigt schematisch einen Längsschnitt durch einen Kraftstoffbehälter 1 für ein Kraftfahrzeug mit einer im Bodenbereich angeordneten Fördereinheit 2 zur Förderung von Kraftstoff aus dem Kraftstoffbehälter 1 zu einer Brennkraftmaschine 3 des Kraftfahrzeuges. Die Fördereinheit 2 weist einen Schwalltopf 4 mit einer darin angeordneten, elektrisch betriebenen Kraftstoffpumpe 5 auf. Eine Ansaugöffnung 6 der Kraftstoffpumpe 5 ist im Bodenbereich einer ersten Kammer 7 des Schwalltopfes 4 angeordnet. Eine Vorlaufleitung 8 führt von der Kraftstoffpumpe 5 zu der Brennkraftmaschine 3. Weiterhin ist im Bodenbereich eine Saugstrahlpumpe 9 angeordnet, welche über eine von der Vorlaufleitung 8 abgezweigte Kraftstoffleitung 10 mit Kraftstoff als Treibmittel versorgt wird. Die Saugstrahlpumpe 9 saugt Kraftstoff über ein am Schwalltopf 4 angeordnetes Bodenventil 11 an und fördert diesen in die erste Kammer 7 des Schwalltopfes 4.

In dem Schwalltopf 4 ist eine Wandung 12 zur Abtrennung der ersten Kammer 7 von einer zweiten Kammer 13 angeordnet. Die Wandung 12 hat ein als Drosselventil ausgebildetes Ventil 14, welches ein Durchströmen von Kraftstoff in die erste Kammer 7 ermöglicht. Die die Kammern 7, 13 voneinander trennende Wandung 12 ist niedriger als eine äußere Wandung 15 des Schwalltopfes 4. Hierdurch wird sichergestellt, dass beim normalen Betrieb der Fördereinheit 2 die zweite Kammer 13 jederzeit mit Kraftstoff gefüllt ist.

Beim Betrieb der Fördereinheit 2 wird die Brennkraftmaschine 3 mit Kraftstoff versorgt und gleichzeitig der Schwalltopf 4 über die Saugstrahlpumpe 9 mit Kraftstoff befüllt. Die Befüllung des Schwalltopfes 4 mit Kraftstoff ist so lange sichergestellt, wie der Kraftstoffspiegel im Kraftstoffbehälter 1 bis zu dem Bodenventil 11 reicht. Sinkt der Kraftstoffspiegel unter das Bodenventil 11, versorgt die Fördereinheit 2 die Brennkraftmaschine 3 so lange mit Kraftstoff, bis die erste Kammer 7 des Schwalltopfes 4 leer ist, wie es in Figur 1 dargestellt ist. Die Brennkraftmaschine 3 erhält damit keinen Kraftstoff und die Kraftstoffpumpe bleibt stehen. Ein Nachfüllen des Kraftstoffbehälters 1 mit Kraftstoff erfolgt meist mit einer sehr geringen Menge. Diese Menge reicht in der Regel aus, um den Füllstand im Kraftstoffbehälter 1 wieder bis zum Bodenventil 11 ansteigen zu lassen. Da jedoch die Ansaugöffnung 6 der Fördereinheit 2 im Schwalltopf 4 höher angeordnet ist, als der Füllstand im Kraftstoffbehälter 1, kann die Fördereinheit 2 erst wieder Kraftstoff ansaugen und die Saugstrahlpumpe 9 mit Kraftstoff als Treibmittel versorgen, wenn der Kraftstoffspiegel in der ersten Kammer 7 höher ist als die Ansaugöffnung 6 der Fördereinheit 2.

Nach der Entleerung der ersten Kammer 7 strömt in der zweiten Kammer 13 vorhandener Kraftstoff über das als Drosselventil ausgebildete Ventil 14 langsam in die erste Kammer 7, wie es in Figur 2 dargestellt ist. Die Drosselwirkung ist derart ausgelegt, dass der hydraulische Ausgleichsvorgang drei bis fünf Minuten dauert. Durch das Durchströmen des Kraftstoffs in die erste Kammer 7 befindet sich die Ansaugöffnung 6 wieder unterhalb des Kraftstoffspiegels. Damit kann die Fördereinheit 2 wieder die Brennkraftmaschine 3 und die Saugstrahlpumpe 9 mit Kraftstoff versorgen.

Die Drosselung des in die erste Kammer 4 geführten Volumenstroms durch das als Drosselventil ausgebildete Ventil 14 ist derart bemessen, dass der Kraftstoff langsamer in die erste Kammer 7 einströmt als die Fördereinheit 2 Kraftstoff zu der Brennkraftmaschine 3 fördert.

## Patentansprüche

1. Fördereinheit zur Förderung von Kraftstoff aus einem Kraftstoffbehälter (1) eines Kraftfahrzeuges mit einem eine erste Kammer (7) zum Sammeln von Kraftstoff aufweisenden Schwalltopf (4), mit einer Kraftstoffpumpe (5) zum Ansaugen von Kraftstoff und mit einer nahe des Bodens der ersten Kammer (7) des Schwalltopfes angeordneten Ansaugöffnung (6) der Kraftstoffpumpe (5), wobei eine zweite Kammer (13) über ein Ventil (14) mit der ersten Kammer (7) verbunden ist und das Ventil (14) ein Drosselventil ist, **dadurch gekennzeichnet, dass** der von dem Ventil (14) begrenzte Volumenstrom an Kraftstoff kleiner ist als der von der Kraftstoffpumpe (5) geförderte Volumenstrom.

2. Fördereinheit nach Anspruch 1, **dadurch gekennzeichnet, dass** die zweite Kammer (13) einstückig mit dem Schwalltopf (4) gefertigt ist.

3. Fördereinheit nach Anspruch 1 oder 2, **dadurch gekennzeichnet, dass** die Kammern (7, 13) in derselben Höhe angeordnet sind.

4. Fördereinheit nach zumindest einem der vorhergehenden Ansprüche, **dadurch gekennzeichnet, dass** das Ventil (14) in einer gemeinsamen Wandung (12) der ersten Kammer (7) und der zweiten Kammer (13) angeordnet ist.

5. Fördereinheit nach zumindest einem der vorhergehenden Ansprüche, **dadurch gekennzeichnet, dass** die zweite Kammer (13) als die erste Kammer (7) umschließende Ringkammer ausgebildet ist.

6. Fördereinheit nach zumindest einem der vorhergehenden Ansprüche, **dadurch gekennzeichnet, dass** die zweite Kammer (13) innerhalb des Schwalltopfes (4) angeordnet ist und die gemeinsame Wandung (12) zwischen der ersten Kammer (7) und der zweiten Kammer (13) niedriger ist als eine äußere Wandung (15) des Schwalltopfes (4).

7. Fördereinheit nach zumindest einem der vorhergehenden Ansprüche, **dadurch gekennzeichnet, dass** das Ventil (14) als Öffnung mit einem vorgesehenen Querschnitt ausgebildet ist.

8. Fördereinheit nach zumindest einem der vorhergehenden Ansprüche, **dadurch gekennzeichnet, dass** das Ventil (14) den von der zweiten Kammer (13) in die erste Kammer (7) überströmenden Volumenstrom derart drosselt, dass ein Niveauausgleich in drei bis fünf Minuten nach Stillstand der Kraftstoffpumpe (5) erfolgt.

9. Fördereinheit nach zumindest einem der vorhergehenden Ansprüche, **dadurch gekennzeichnet, dass** die zweite Kammer (13) ein Volumen von ungefähr 10 - 20% des Schwalltopfvolumens hat.

## Claims

1. Feed unit for feeding fuel out of a fuel tank (1) of a motor vehicle, having a baffle (4) which has a first chamber (7) for collecting fuel, having a fuel pump (5) for sucking up fuel and having a fuel-pump (5) suction opening (6) arranged in the vicinity of the bottom of the first chamber (7) of the baffle, a second chamber (13) being connected to the first chamber (7) via a valve (14), and the valve (14) being a throttle valve, **characterized in that** the volumetric flow of fuel that is restricted by the valve (14) is smaller than the volumetric flow fed by the fuel pump (5).

2. Feed unit according to Claim 1, **characterized in that** the second chamber (13) is manufactured integrally with the baffle (4).

3. Feed unit according to Claim 1 or 2, **characterized in that** the chambers (7, 13) are arranged at the same height.

4. Feed unit according to at least one of the preceding claims, **characterized in that** the valve (14) is arranged in a common wall (12) of the first chamber (7) and of the second chamber (13).

5. Feed unit according to at least one of the preceding claims, **characterized in that** the second chamber (13) is designed as an annular chamber surrounding the first chamber (7).

6. Feed unit according to at least one of the preceding claims, **characterized in that** the second chamber (13) is arranged within the baffle (4) and the common wall (12) between the first chamber (7) and the second chamber (13) is lower than an outer wall (15) of the baffle (4).

7. Feed unit according to at least one of the preceding claims, **characterized in that** the valve (14) is designed as an opening with a designated cross section.

8. Feed unit according to at least one of the preceding claims, **characterized in that** the valve (14) throttles the volumetric flow, which flows from the second chamber (13) into the first chamber (7), in such a manner that the level is equalized in three to five minutes after the fuel pump (5) has stopped.

9. Feed unit according to at least one of the preceding claims, **characterized in that** the second chamber (13) has a volume of approximately 10-20% of the baffle volume.

## Revendications

1. Module de transfert de carburant destiné au transfert de carburant provenant d'un réservoir à carburant (1) d'un véhicule automobile, comportant un réservoir d'accumulation (4) ayant un premier compartiment (7) pour l'accumulation de carburant, une pompe à carburant (5) pour l'aspiration du carburant et une ouverture d'aspiration (6) de la pompe à carburant (5) placée près du fond du premier compartiment (7) du réservoir d'accumulation, un deuxième compartiment (13) étant relié, par l'intermédiaire d'une soupape (14), au premier compartiment (7) et la soupape (14) étant une soupape d'étranglement, **caractérisé en ce que** le débit volumétrique de carburant limité par la soupape (14) est inférieur au débit volumétrique transféré par la pompe à carburant (5).

2. Module de transfert de carburant selon la revendication 1 **caractérisé en ce que** le deuxième compartiment (13) est fabriqué en une seule pièce avec le réservoir d'accumulation (4).

3. Module de transfert de carburant selon la revendication 1 ou 2 **caractérisé en ce que** les compartiments (7, 13) sont disposés à la même hauteur.

4. Module de transfert de carburant selon au moins l'une des revendications précédentes **caractérisé en ce que** la soupape (14) est disposée dans une paroi commune (12) entre le premier compartiment (7) et le deuxième compartiment (13).

5. Module de transfert de carburant selon au moins l'une des revendications précédentes **caractérisé en ce que** le deuxième compartiment (13) est conçu sous la forme d'un compartiment annulaire entourant le premier compartiment (7).

6. Module de transfert de carburant selon au moins l'une des revendications précédentes **caractérisé en ce que** le deuxième compartiment (13) est placé à l'intérieur du réservoir d'accumulation (4) et que la paroi commune (12) entre le premier compartiment (7) et le deuxième compartiment (13) est plus basse qu'une paroi extérieure (15) du réservoir d'accumulation (4).

7. Module de transfert de carburant selon au moins l'une des revendications précédentes **caractérisé en ce que** la soupape (14) est conçue comme ouverture avec une section prévue.

8. Module de transfert de carburant selon au moins l'une des revendications précédentes **caractérisé en ce que** la soupape (14) réduit le débit volumétrique s'écoulant du deuxième compartiment (13) dans le premier compartiment (7) de telle manière qu'une compensation de niveau se produit en trois à cinq minutes après l'arrêt de la pompe à carburant (5).

9. Module de transfert de carburant selon au moins l'une des revendications précédentes **caractérisé en ce que** le deuxième compartiment (13) a un volume égal à environ 10 à 20 % du volume du réservoir d'accumulation.
